**Europäisches Patentamt**

(19) **European Patent Office**

**Office européen des brevets**

(11) Publication number: **0 237 671**
**A2**

(12) # EUROPEAN PATENT APPLICATION

(21) Application number: **86308395.2**

(22) Date of filing: **29.10.86**

(51) Int. Cl.³: **G 06 F 9/44**

(30) Priority: **29.10.85 US 792424**

(43) Date of publication of application:
**23.09.87 Bulletin 87/39**

(84) Designated Contracting States:
**DE FR GB**

(71) Applicant: **MITEM DEVELOPMENT PARTNERS**
**20300 Stevens Creek Boulevard, Suite 465**
**Cupertino California 95014(US)**

(72) Inventor: **Kleineman, Aurel**
**307 Waverly Street**
**No. 5 Menlo Park California 94806(US)**

(72) Inventor: **Derman, Bryan E.**
**4491 Othello Drive**
**Fremont California 94536(US)**

(72) Inventor: **Clough, Robert W.**
**101 La Rinconada Drive**
**Los Gatos California 95030(US)**

(72) Inventor: **Carroll, David J.**
**7954 Woodlark Way**
**Cupertino California 95014(US)**

(74) Representative: **Jones, Ian et al,**
**POLLAK MERCER & TENCH High Holborn House 52-54**
**High Holborn**
**London WC1V 6RY(GB)**

(54) Controlling the execution of host computer application programs through a second computer.

(57) Method and apparatus for executing a computer application program in a host computer under the control of a second computer located at a workstation include the steps of translating selected portions of the host computer's presentation information into functionally equivalent user-oriented presentation information for use in the second computer, and translating a user's responses to the user-oriented presentation information at the second computer into response information for use in the host computer to interact with the application program.

EP 0 237 671 A2

./...

**Figure 1**
**Architecture Overview**

-1-

CONTROLLING THE EXECUTION OF HOST COMPUTER APPLICATION
PROGRAMS THROUGH A SECOND COMPUTER

DESCRIPTION

This invention relates to the execution of computer
application programs in a host computer under the control
of a second computer, which can be a less powerful
computer.

There is a need in the data processing field for a
single product configuration capable of addressing the
following requirements in the computer industry:

1.    The ability to develop and operate "user friendly"
interfaces which, by providing added functional capability
(such as integration of application data), result in
computers which have a high degree of consistency and
ease of operation through the use of techniques such as
high function representations in the form of graphic
icons and other graphics, and which will be relatively
easy for a user to learn, preferably in an intuitive way.

2.    The ability for new computer environments to
operate existing software packages, without modifications
to those packages, and to retain the benefits currently
found for those applications which run in a multiuser,
multitasking, centralized computer which provides a high
degree of storage capacity, processing capacity and
information management services.

3.    A method for transferring and exchanging data
among various different applications and host computers.

Although there are various approaches which provide
partial solutions to these problems, presently there is no set of products designed specifically to address all of these requirements. The current approaches fall into two categories:

1. Move the application functionality to a cost effective, user-friendly, computer workstation environment which provides both the hardware and software tools and technology to add the functionality of a user-friendly interface to the application. For most business application uses, this computer workstation environment is obtained through the use of the class of microcomputers known as personal computers.

Although this approach has been used to effectively provide the benefit of the user-friendly interface, moving the application functionality involves various amount of reengineering and rewriting in order to move, or "port", the application to this computer workstation environment. The costs of such reprogramming often makes this approach undesirable.

In addition, if the entire application software and data files are moved to this workstation environment, the workstation capacty, due in part to its cost effectiveness, often becomes a problem and the processing capacity required to provide the user-friendly interface functions plus the application processing is often beyond the capabilities of this workstation environment. In addition, the microprocessor technologies used in these workstations are often limited in the amount of storage which the workstation is capable of accessing. Even where the storage capacity is available in this workstation environment, the problems of distributed information management often outweigh the advantages obtained.

A hybrid approach allows the application software to operate in a secondary computer workstation but the data files remain in the multiuser, multitasking, centralized computer. This approach has the advantage of providing the centralized information management services and the user-friendly interface while retaining, and even increasing, the capacity of the multiuser, multitasking, central computer. Since this approach involves a secondary-to-host computer link, accessing data over that link often presents severe performance limitations. The costs of moving the 'application remain a disadvantage. In addition, the processing capacity required to provide the user-friendly interface functions plus the application processing is often beyond the capabilities of this workstation environment.

2. Add the user-friendly interface functionality to a multiuser, multitasking, centralized computer which provides a high degree of storage capacity, processing capacity, information management services.

Attempts to program the centralized computer to perform the user-friendly functons are usually limited by a lack of hardware, software tools and technology to provide such functions.

The hybrid approach involves the use of an intelligent terminal or computer workstation in conjunction with the reprogramming of the central computer. In this approach, the application in the central computer is programmed to direct the workstation to perform many of the user-friendly functions at the appropriate time during the execution of the application. Adding the user-friendly interface functionality involves the various amounts of reengineering and rewriting of the application. The costs of such reprogramming often makes this approach undesirable. In addition, such an approach, to provide the maximum benefit, would obsolete the existing terminals used with the application.

The present invention accordingly uses a secondary computer communicating with an existing multiuser, multitasking, high capacity, centralized computer to provide the tools _____

and technology which allows the development and operation of adaptive, user-friendly interfaces to existing application software packages operating in that centralized computer. The invention allows the secondary computer to function as a distributed processor, operating in conjunction with the central computer to perform the functions required to provide a user-friendly interface.

The invention also provides a machine-independent, information-exchange environment and subsequent method for transferring and exchanging data among applications and hosts. Furtheremore, the invention provides the added functionality without requiring the application software in the centralized computer to be changed in any way.

Utilizing this invention presents an environment which provides a standardized style and manner by which the user interacts with various, different applications. The present invention distributes the functions of accessing and interacting with one or more host applications and providing a user-friendly interface for each application, such that new or existing full featured business applications can run unencumbered in the more powerful host computer while the majority of the power of the secondary computer can be used to present the user with a state-of-the-art, user-friendly interface to the application(s). Thus, many of the performance limitations of a secondary computer are avoided.

The secondary computer, which can be described as a very intelligent workstation, changes the user's environment from one in which a user must adapt to a fixed interface for each application and a fixed method of operating the secondary computer (or alternately, a present-day computer terminal) to one in which the user defines the way he wishes to interface to the application even though the application interface in the actual host application remains fixed. As a result of this invention,

there is no need to modify the vast libraries of business application software to provide such an interface. Transitions in conditions required to accomplish that interface are performed by the secondary computer (workstation) through the architecture of this invention.

Since the application remains in the host computer and only a relatively small set of translation instructions, called an application interface module (AIM), may be downloaded to be executed by the secondary computer, the problems associated with the relatively small memory of the secondary computer are overcome. Also, since only the AIM and data that has been used or changed by the user needs to be moved from or to the host system, performance delays typical of more conventional systems are overcome.

Additionally, since the environment created by the invention fully supports multiple sessions in support of applications running on a single host or on separate hosts, and since the environment translates all applications user interface operations such that, while being operated on by way of the secondary computer, they all have a common data and interaction form, interchange and integration of information between any application becomes a readily available facility to the user. In addition, data or graphic information derived from the host application but created in the secondary computer can be appended to the information that is a part of the application in the host system.

That is, the secondary computer presents the same familiar user friendly interface to the user for a variety of application programs to be run, thus eliminating the need for the user to learn the often complicated details of interfacing with a variety of different application programs, while still making available to the user the benefits of these application programs. Additionally, this solution avoids the complexity and maintenance costs of distributed information management.

A multiuser multitasking host computer employing the present invention and using the secondary computer as a terminal can continue to be a node in a networking environment, should the user's needs require a network.

Thus it will be evident that the present invention can be embodied so as to meet the requirements stated in 1, 2 and 3 above.

The invention is further explained below, by way of illustration, with reference to the accompanying drawings, in which;

Fig. 1 illustrates an architecture overview of a system embodying the present invention;

Figs. 2a, 2b and 2c, when placed side by side, illustrate the general flow of information through the present system;

Fig. 3 illustrates the input stream processing in the system of the invention;

Figs. 4 and 5 illustrate display processing and display updating, respectively;

Fig. 6 illustrates keystroke processing;

Fig. 7 illustrates mouse processing;

Figs. 8 and 9 show AIM initialization and signal processing, respectively;

Fig. 10 illustrates the rule processing detail; and

Figs. 11 and 12 are examples of Rule Sequence and Rule Execution tables, respectively.

The illustrated embodiment of the present invention will be described by first providing an overview of the architecture thereof.

Architecture Overview

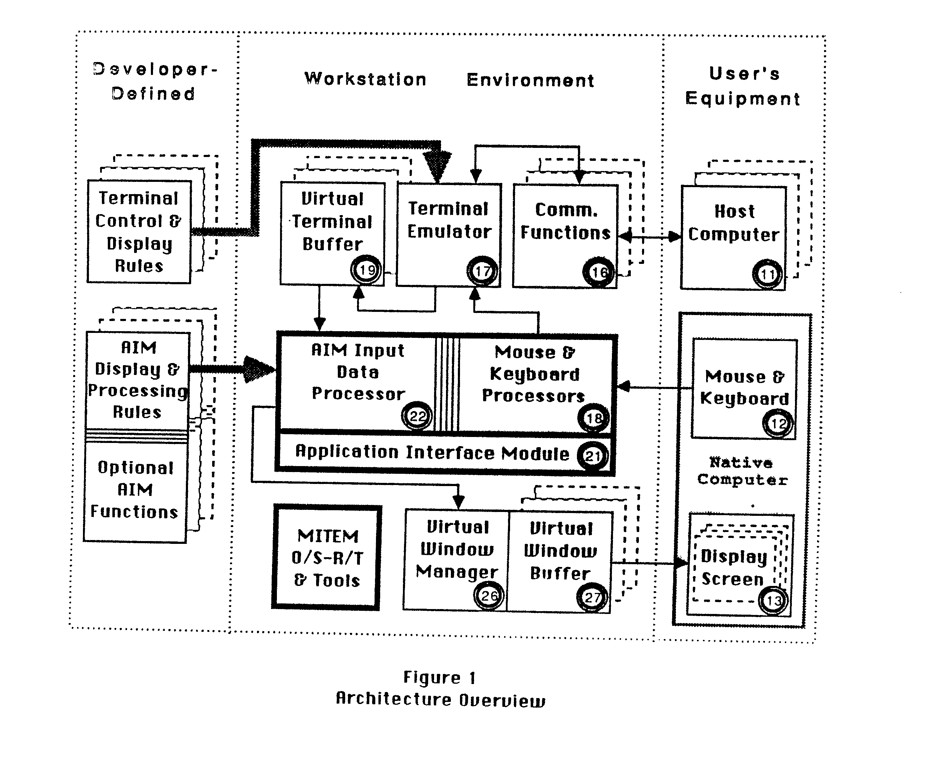

The workstation of the present invention connects to a host computer in the usual manner. As shown in Fig. 1, the user communicates with a host application program in the host computer 11 through the present workstation using a keyboard, a display screen 13, and optionally, a mouse. Information is presented on the screen 13 through a set of icons, secondary computer-style windows and 'pull-down menus.

The host's "screen" information and the user's reactions to that information may be modified by means of a set of translation functions which are defined by the application interface modules (AIM). Since the AIM functions are executed by the workstation, the load on the host processor 11 may be reduced.

Run-time System and Tools

The run-time system provides the interface between the secondary computer native operating system and the various modules and tools operable within the environment of the invention. The operating run-time system supplies many generalized functions and tools which are used during the development and execution of an AIM.

The central event/time monitor, a major portion of which may be supplied by the native operating system for the secondary computer, is the focal controlling function within the present operating run-time system. The central event/time monitor buffers the interrupt-driven events (e.g., arriving characters, keyboard and mouse operations) and performs the distribution of those events to the time-driven operations (e.g., display screen updating) and to the event-driven operations (e.g., AIM processing). In addition, the central event/time monitor provides the "process" distribution (i.e., which AIM is to be employed) and the prioritization services.

# Communication Functions

The host computer 11 communicates with the workstation through the comm(unication) functions element 16. The input and output communication functions provide the interface between the terminal emulator 17 and the host 11. These functions provide the required secondary-to-host link-level protocol (e.g., packetizing/depacketizing, error control, flow control, etc.) and the multiplexor/demultiplexor switching function necessary to support multiple, concurrent, virtual terminal sessions.

In the input mode, communications functions element 16 receives the data stream which has been conditioned by host 11 according to the communications protocol and, after performing the necessary operations required to remove the communications protocol from the data stream, passes the data stream to terminal emulator 17. In the output mode, communication functions element 16 accepts characters from terminal emulator 17, conditions the data stream according the communications protocol, and transmits the data to host 11.

A different set of communications functions is usually required for each class of communication link hardware and/or protocol supported (e.g., RS-232/C, Ethernet, Apple-Bus, etc.). Furthermore, since communication functions must be supported by host 11, the set of communication functions for any given secondary-to-host connection is usually defined at the time of physical connection and remains relatively fixed.

A given set of communications functions may support a set of link-level protocols and a set of multiplexing/demultiplexing (Mux/DeMux) protocols. A different Mux/DeMux is usually required for each class of host protocol supported (e.g., 3270 Bisynchronous (BSC) and System Network Architecture (SNA), etc.).

## Terminal Emulator

Terminal emulator 17 performs two sets of translations:

The incoming, terminal-dependent data is translated to a secondary environment-dependent, internal ("universal") representation for use by the remainder of the system.

The outgoing "universal" (secondary computer-dependent) data is translated to a terminal-dependent data stream for use by the host application.

Terminal emulator 17 receives the incoming data stream originally generated by the host application program from communcations functions 16. The emulator's outgoing data stream is generated by mouse and keyboard operations after the events have been processed by the keyboard and mouse processor 18.

Since the incoming data stream is translated to the internal representation used within the secondary computer, a library of control functions is accessible to perform the various terminal functions. Furthermore, once a routine is developed to perform, for example, a screen control operation, that routine may be used in a "mix and match" manner during the development of other terminal emulators. The present invention environment provides a library of common screen control functions to choose from. In essence, the terminal emulator presents a predefined, terminal-independent interface to the AIM. Terminal emulator 17 also performs "local" operations normally present in the terminal being emulated (e.g., block mode transmission, programmable function key capabilities, etc.).

## Virtual Terminal Buffer

The virtual terminal buffer 19 contains the host's screen information. Since all information contained within the normal host screen is represented in a consistent, internal format, the virtual terminal buffer is the reference point for interaction with the host application.

## Application Interface Module (AIM)

The AIM, represented symbolically as 21 in Fig. 1, is the mechanism which provides the unique, host application-dependent working environment within the secondary computer workstation. The AIM is where the user interface characteristics relative to the host's application are implemented. In essence, the AIM provides two sets of translations:

The host's "screen" presentation is translated to a functionally equivalent, user-oriented presentation of the information.

The user's actions, resulting from the user's view of the host application program as presented at the secondary computer, are translated to the appropriate "keystrokes" required by the host application.

This has the advantage that the user at the workstation employing the AIMs need not have any detailed knowledge of, or training on, the host computer to be able to cause execution of the selected application program on the host computer under the control of the user at the workstation. The user may interact at the workstation using the user friendly interface thereof, including icons and other features of this interface, with which he is familiar.

The AIM logically consists of two major components, a host data stream processor 22 and the various mouse and keyboard processors 18.

## AIM Input Data Processor

The host data stream processor 22 analyzes and processes the data stream from host 11 relative to the virtual terminal buffer 19. It is only through this analysis that the host application program can be "understood". Most translations of the host's screens are performed by the host data stream processor (e.g., rearranging display areas and changing character fonts before presentation to the user).

Mouse and Keyboard Processors

The mouse and keyboard processors 18 analyze and process the data stream from the mouse and keyboard relative to the virtual window buffer. It is only through this analysis that the user can be "understood" and related back to the host "screen". Most translations of the user's actions are performed by mouse and keyboard processors 18 (e.g., sending characters as a result of pull-down menus, cursor positioning by pointing, etc.).

Virtual Window Manager

The virtual window manager 26 performs most of the common but complex operations necessary to manage the presentation of information from the virtual terminal buffer 19 on screen 13. The "normal" secondary computer window environment is transparently available to the host application through the AIM to present workstation displays (e.g., HELP information, status queries, etc.). In addition, virtual window manager 26 provides much of the mouse-event processing (e.g., cursor movement by pointing, area selection, etc.) and supplies the functions required to relate the user's presentation to the host's presentation (ie., the mapping of the virtual window buffer to the virtual terminal buffer).

Virtual Window Buffer

The virtual window buffer 27 contains the user's view of the host's application "screen". Since the information to be displayed to the user is represented in a consistent, internal format, virtual window buffer 27 is the reference point for interaction with the user.

## AIM Development Process

The AIM development process is primarily one of table specification and editing. A significant percentage of the work is in the characterization of the interface. Once the interface has been characterized, the various components of the interface may be specified. Given a "template" AIM, known as a terminal emulator or "passthrough" AIM, the "developer" first creates the various types of secondary computer resources (i.e., tables and functions) required by AIM (e.g., menus, dialogs, windows.) The "empty" predefined AIM resources, called Rule Tables, are edited to "program" the application-specific interface operations. Once the Rule Tables have been completed, the AIM resources may be checked, parsed, optimized, tokenized and linked by the AIM generator. The resulting AIM may be installed on the host using the present functions of the secondary computer.

## OVERVIEW OF OPERATIONS

The discussion below follows some host-generated data (a "screen-full", for example), through the present system, describing the operations resulting from a user's response to this data, and the data sent back to the host as a result of the AIM's translation of the user's actions. This portion of the discussion does not consider the detailed contributions of the workstation's native operating system or the run-time environment. Instead, the discussion assumes that the host connection and log-in procedures have been performed, that the host application has been brought into play and that the appropriate AIM has been initialized in the workstation. The AIM consists of various resources which direct the operation of the run-time system.

## AIM Initialization

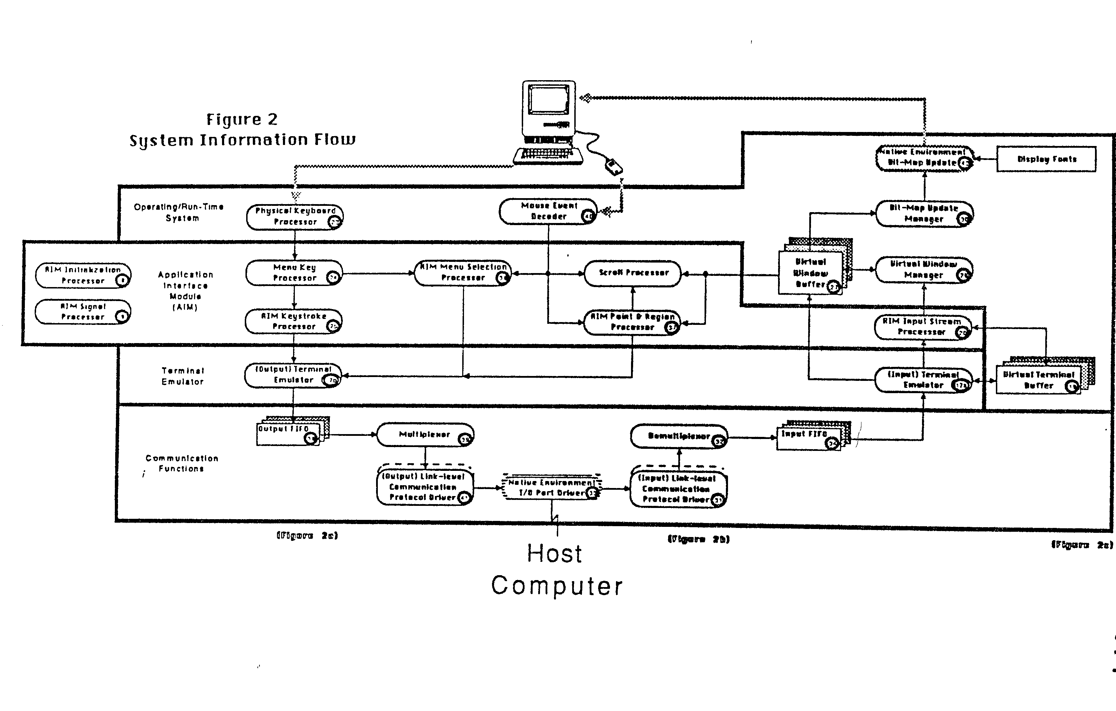

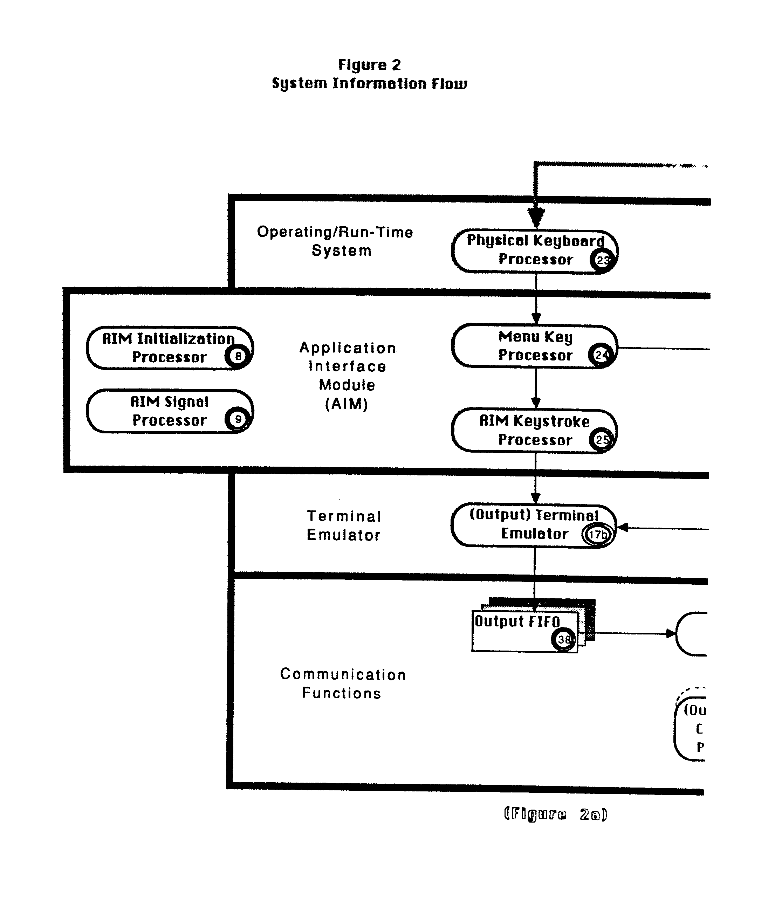

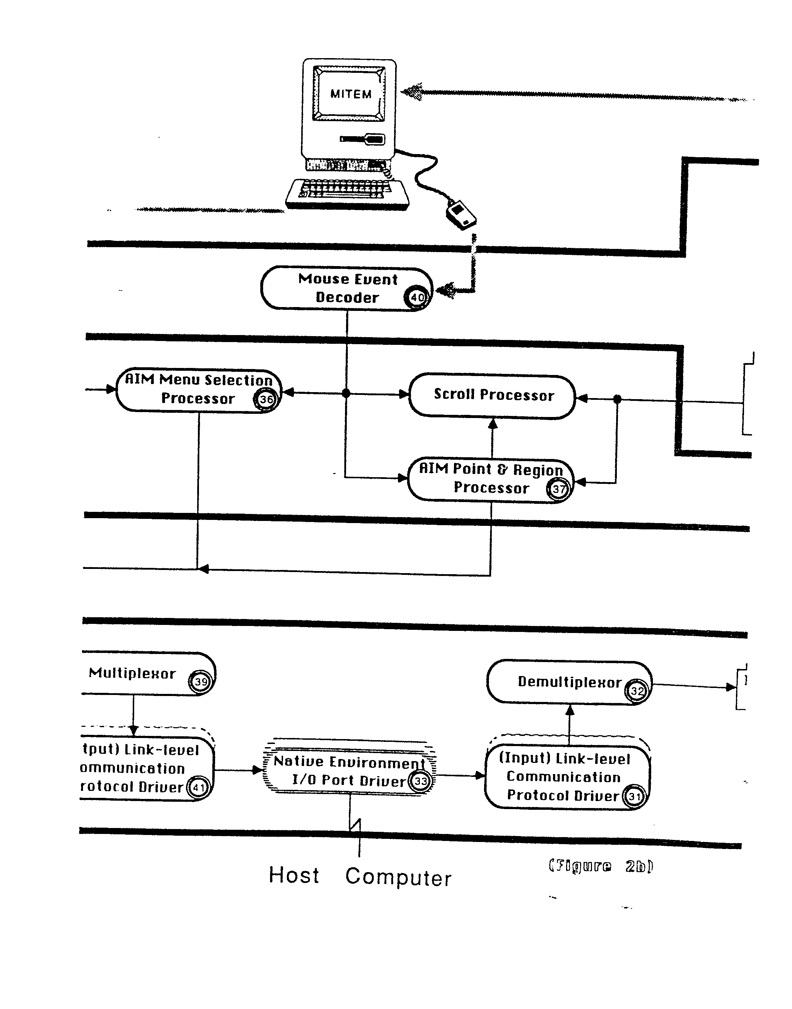

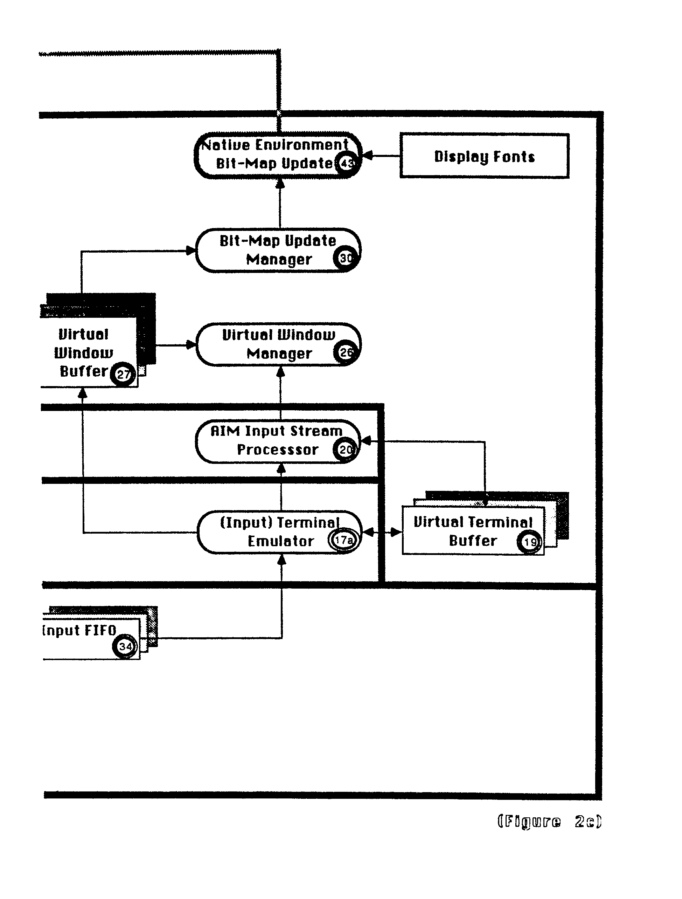

Reference may now be had to Figs. 2a, 2b and 2c which, when laid side by side, show an overview of the system operation. When an AIM is loaded into the run-time system, initialization processor 8 (Fig. 2a) performs the functions required to "get an AIM started" (e.g., create a window, etc.). In short, the AIM initialization processor sets the beginning environment for the AIM.

## AIM Signal Processing

At various times during the execution of an AIM, different events may occur which are not otherwise handled during the normal flow of events. Such events may be defined as signals to be processed by the AIM signal processing subsystem. The signal processor 9 performs the functions required to respond to the various stimuli defined as signals (e.g., events such as activate window or messages such as "physical host connection lost", etc.).

## Host Data Stream Input

The "screenful of data" generated by the host enters the workstation by way of the host data stream input subsystem. The host data stream input subsystem contains both the link-level communication protocol driver 31 (Fig. 2b) and demultiplexor functions 32. Generally, the native environment I/O port driver 33 accepts the incoming, host-originated characters and activates the link-level communication protocol driver 31 which, in turn, activates demultiplexor 32. Link-level protocol driver 31 removes the protocol information from the input data stream and, when it has been stripped of all its protocol overhead, it is passed to demultiplexor 32.

The multiplexor/demultiplexor functions supports the concurrent operation of multiple, virtual circuits over a single physical connection. The demultiplexor removes the multiplexing information from the data stream, then places the data in the input queue which consists of a first in-first out (FIFO) input buffer 34 (Fig. 2c) logically attached to the AIM associated with that virtual circuit. The data in the FIFO 34 is identical to that which was generated by the host application, and FIFO 34 provides buffering for the input terminal emulator 17a.

## Input Data Stream Processing

Once the data has been entered into the workstation, the job of translation can begin. Still referring to Fig. 2c, the input data stream processing subsystem consists of the terminal emulator 17a, virtual terminal buffer 19, AIM input stream processor 20, virtual window manager 26, and virtual window buffer 27 functions. Terminal emulator 17a translates the terminal-specific data into a workstation representation, buffers the information in virtual terminal buffer 19, then notifies AIM input data processor 20 of the arriving characters. AIM input data processor 20 performs any required processing, then passes the characters to virtual window manager 26. Virtual window manager 26 maintains virtual window buffer 27 in a manner which allows optimal updating of the workstation screen display. Virtual window buffer 27 provides buffering for the bit map update manager 30 which is periodically activated to update the workstation display screen.

## Display Processing and Update

The display processing subsystem manages the bit-map update functions used to generate the workstation display. Based upon the elapsed time, the bit map update manager 30 activates the native bit map update routines. The display update subsystem performs the actual bit map update of the workstation display.

## Keystroke Processing

The keystroke processing subsystem (Fig. 2a) performs the AIM keyboard processor portion of the mouse and keyboard processor 18 functions. The keystroke processing subsystem contains the physical keyboard processor 23, menu key processor 24, AIM keystroke processor 25, and output terminal emulator 17b functions.

Events from the keyboard activate physical keyboard processor 23 which, in turn, activates menu key processor 24. If the keystroke from the keyboard is equivalent to a menu selection, control is passed to AIM menu processor 36 (Fig. 2b). Other keystrokes are passed to AIM keystroke processor 25, then to output terminal emulator 17b. Emulator 17b, which may also receive keystrokes from the AIM menu and point processors 36, 37, places the characters in an output FIFO 38.

## Host Data Stream Output

The host data stream output subsystem consists of multiplexor 39 (Fig. 2b) and output link-level communication protocol driver 41 functions. The characters to be output are taken from output FIFO 38 and processed by multiplexor 39 and the link-level communication protocol driver 41. When the character stream has been conditioned, i.e., its multiplexing and protocol envelope have been added, the I/O port driver 33 from the native environment is used to transmit the characters at the hardware I/O port level. Output FIFO 38 provides buffering from output terminal emulator 17b until multiplexor 39 is activated to process the characters.

## DETAILS OF OPERATION

## Input Stream Processing

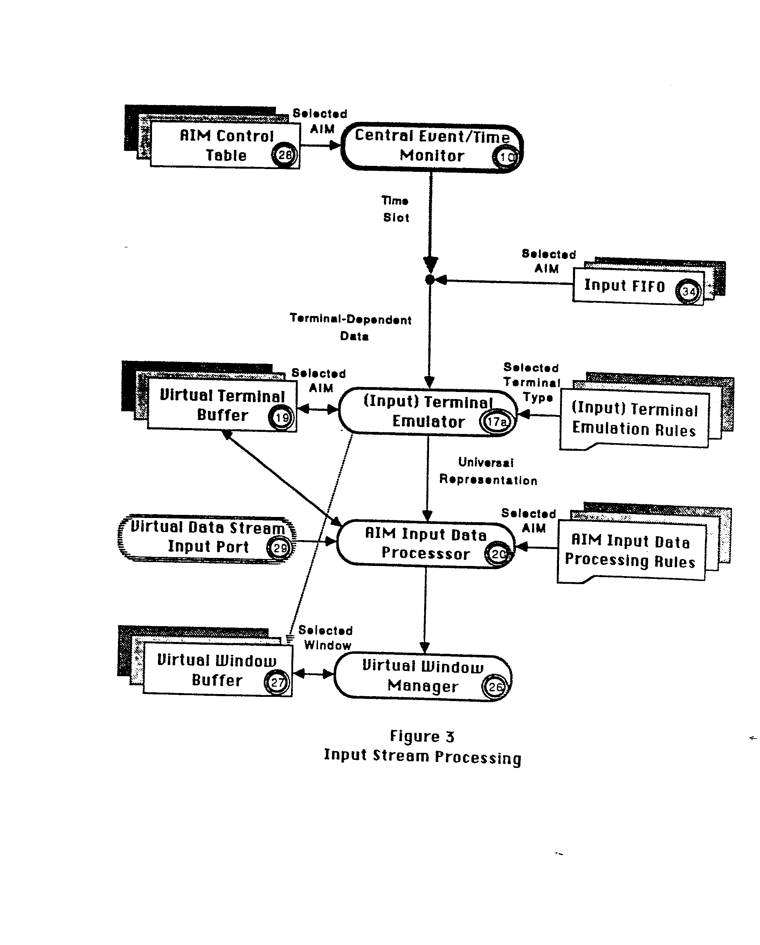

Referring to Fig. 3, the central event/time monitor 10 within the operating run-time system maintains the AIM control tables 28. It is through these tables that the central event/time monitor is able to determine which input FIFO is attached to which virtual circuit.

When the host data stream arrives at the native environment port, an interrupt is generated which passes control to the port driver routines. The driver routines buffer the arriving characters and communicate with the communication driver. The communication driver, based upon a specified minimum number of characters in the input FIFO 34, gets the buffered characters from the appropriate port driver. After calling the port driver to get a set of characters from the driver's input buffer, driver 33 performs the required buffering, error-checking, error correction and/or transmission procedures, where required. The communication driver, based upon a specified maximum number of characters in input FIFO 34, may also call the port driver to perform flow control. When these operations are completed, the communication driver passes the characters to demultiplexor 32. Demultiplexor 32 places the characters into the section(s) of the input FIFO depending upon the virtual circuit to which the characters belong. When complete, control is returned to the central event monitor 10.

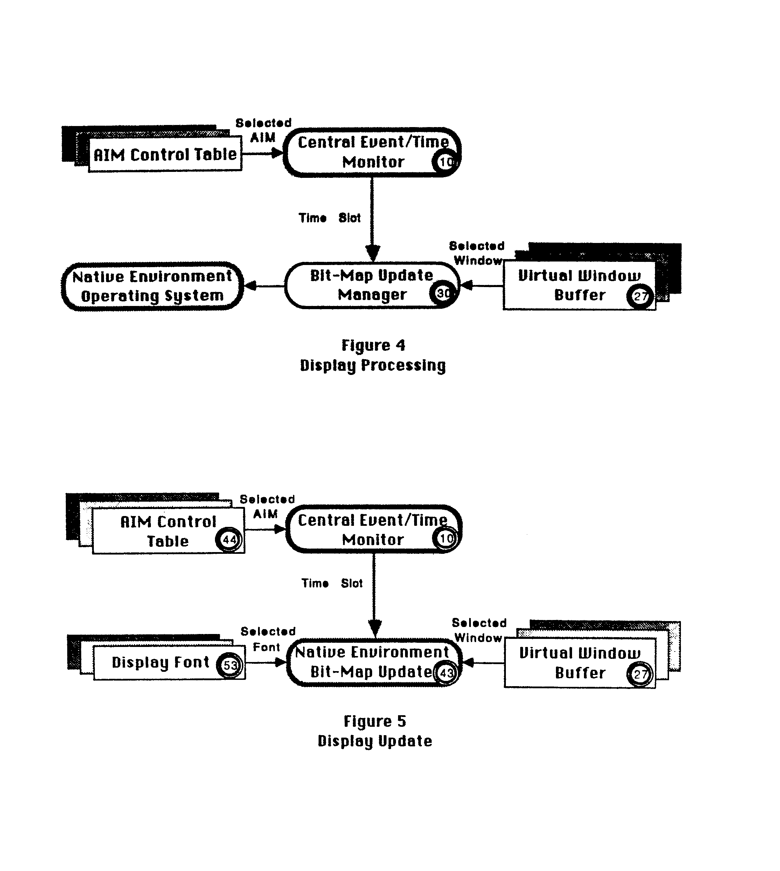

Based upon an elapsed time function, central event/ time monitor 10 controls the passing characters to input terminal emulator 17a. Monitor 10 is also responsible for determining and setting the priority for the distribution of the host data stream characters. Terminal emulator 17a translates the terminal-specific data into the "universal" representation used in the present invention, buffers the information in virtual terminal buffer 19, then notifies AIM input data processor 20 of the arriving characters. Terminal emulator 17a also maintains the data structures within virtual terminal buffer 19. Input data processor 20 performs any rule-directed processing, then passes the characters to virtual window manager 26. Virtual window manager 26 maintains the virtual window buffer 27 in a manner which allows optimal updating of the workstation screen display. Virtual window buffer 27 provides buffering until the bit map update manager (Fig. 4) is activated to update the display screen. The host data stream input subsystem allows the system to inject a "pseudo host" data stream into the processing cycle by way of the virtual data stream input port 29.

To perform its functions, terminal emulator 17a follows the program provided by the sequence and execution tables within the terminal emulator rules. The result is the updated contents of the virtual terminal buffer (for both host and local operations) and, where necessary, activation of the AIM input data processor.

When the terminal emulator retrieves a character from the input FIFO, the characters are (host application) terminal-specific and, generally, of two types:

1. Data characters which are translated to their ASCII representation before being stored in virtual terminal buffer 19.

2. Control characters which indicate terminal control operations and are translated to a universal representation. In this application, the term "universal" is used to indicate a predefined, internal representation used by the workstation software. The universal representation has various forms. The control characters may be translated to:

    A set of pointers to a structure within the virtual terminal buffer (e.g., the general result of explicit cursor addressing commands).

A set of bits within the virtual terminal buffer (e.g., the result of explicit character attribute commands such as set intensity, underline, reverse video, etc.).

The presence or absence of data at a given position within the virtual terminal buffer (e.g., the result of explicit screen operations such as clear to end of line, etc.).

Combinations of the above as a result of explicit control sequences (e.g., clear screen, which normally repositions the cursor) or, more usually, as the result of implicit control operations (e.g., most operations involving data characters cause a repositioning of the cursor and will often imply a change to the associated character attributes).

After the virtual terminal buffer 19 has been updated, AIM input data processor 20 is called. The call to the input data processor specifies the operation and the character(s) affected by the operation.

Virtual terminal buffer 19 contains a terminal-independent version of the host's application screen. The information is the result of characters which have arrived from the host and have been processed by the various components of the communication module and input terminal emulator 17a. The buffer 19 contains, in its universal representation, all the host's screen information and is the reference point for interaction with the host application and for local terminal emulation functions.

AIM input data processor 20 is the portion of the AIM which performs the majority of the screen translations from what the host application generates to that which the user views and interacts with. Processor 20 receives information from the terminal emulator 17a which indicates the operation performed by emulator 17a and the character(s) affected by the operation. Processor 20, after completing its operations, passes the characters and operations to virtual window manager 26.

Virtual window manager 26 maintains the data structures within virtual window buffer 27. When manager 26 is passed a character by processor 20, the characters are terminal-independent and, generally, are of two types, as indicated above for terminal emulator 17.

Data characters indicate displayable characters to be stored in the virtual window buffer.

Control characters indicate screen or window control operations used in universal representation. These control characters are of the type discussed above in connection with terminal emulator 17.

Virtual window buffer 27 contains the user's view of the host's application screen. The information is the result of buffer 27 information translated by processor 20. Buffer 27 is the reference point for interaction with the user for both host-oriented and for local emulator functions. The buffer information is accessed by the bit map update to present the user's screen display.

## Display Processing

The display processing subsystem (Fig. 4) manages the bit map update functions used to generate the display. Based upon the elapsed time, the central event/time monitor 10 activates the bit map update manager 30 which, in turn, activates the native bit map update routines as shown in Fig. 5, display update.

## Display Update

The display update subsystem performs the bit map update of the workstation display. Based upon the elapsed time, the central event/time monitor 10 activates the native environment bit map update routines 43.

The central event/time monitor, based upon the elapsed time and the current state of virtual window buffer 27, periodically activates the native environment bit map update 43. The native environment bit map update is part of the native operating system and is used to generate the user's display. The update uses virtual window buffer 27 and the display font 53 to generate the display. Display fonts 53 are the tables used by the native environment bit map update to generate the various displayable characters.

## Keystroke Processing

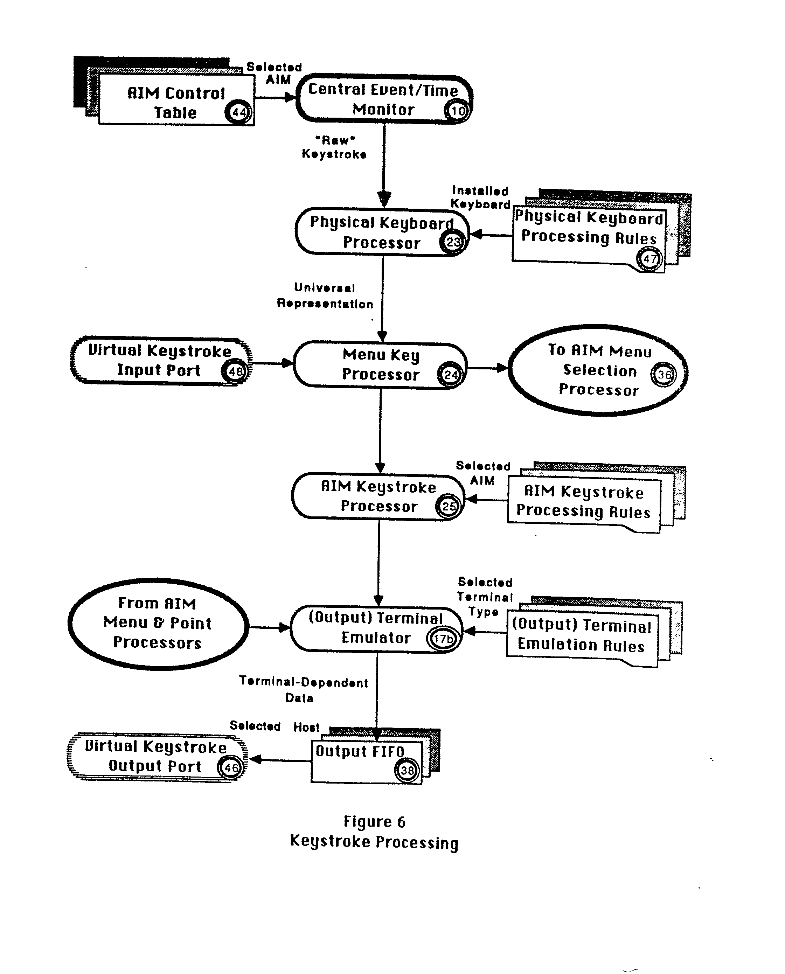

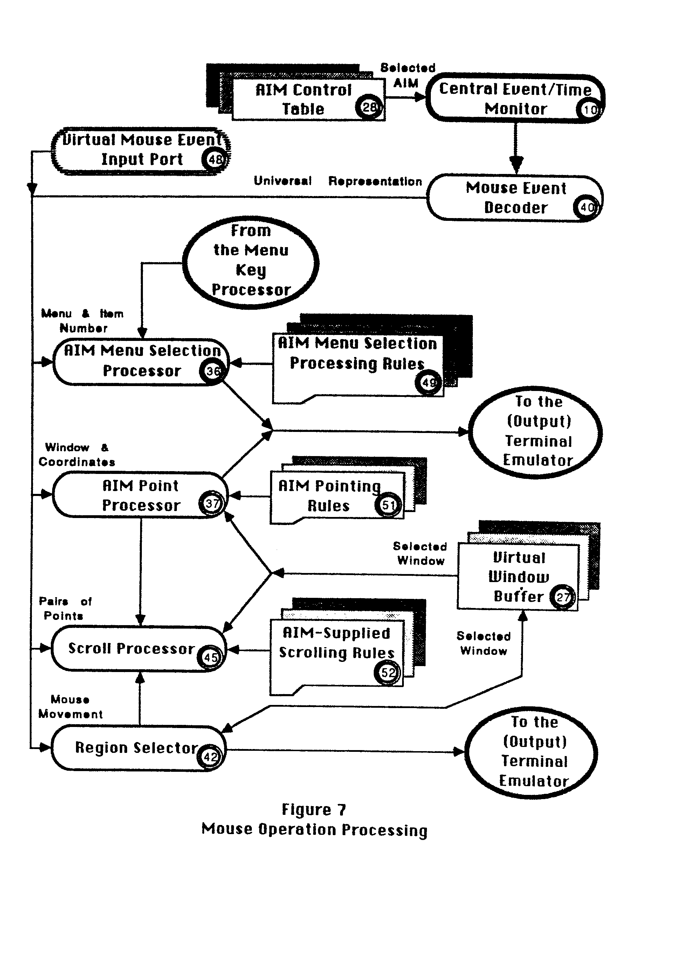

The keystroke processing subsystem (Fig. 6) performs the AIM keyboard processor portion of the mouse and keyboard processor functions identified in Fig. 1. The keystroke processing subsystem contains the physical keyboard processor 23, menu key processor 24, AIM keystroke processor 25 and output terminal emulator functions. Based upon events from the keyboard, the central event/time monitor 10 activates the physical keyboard processor 23 which, in turn, activates menu key processor 24. If the keystroke from the keyboard is equivalent to a menu selection, control is passed to the AIM menu processor 36 (Figure 7). Other keystrokes are passed to AIM keystroke processor 25, then to output terminal emulator 17b. Terminal emulator 17b, which may also receive keystrokes from the AIM menu and point processors 36, 37, passes the host-destined characters to the output FIFO 38.

Central event/time monitor 10, in response to keyboard interrupts, generates keyboard data-available events and passes the raw keystroke data to physical keyboard processor 23. As mentioned above, AIM control table 28 contains the data structures required to switch data and operations among the AIMS. Physical keyboard processor 23 performs the mapping of the currently-installed, physical, raw keyboard character representation and layout to the logical, keyboard character representation and layout. Processor 23 follows the program provided by the sequence and execution tables within the physical keyboard rules. Physical keyboard processing rules 47 provide the programming for the physical keyboard translations. Virtual keystroke input port 48 provides an internal interface point where other parts of the system may inject character stream information (e.g., the emulator when operating in block mode).

Menu key processor 24 is responsible for recognizing command key sequences which are equivalent to menu choices selected from a pull-down menu by way of a mouse operation. When a menu-equivalent keystroke combination is entered, menu key processor 24 generates an event equivalent to that which the mouse event decoder 40 (Fig. 7) would generate. The event is then passed to the AIM menu selection processor 36. AIM keystroke processor 25 is the portion of the AIM which performs the majority of the user translations from what the user generates to that which the host application receives and interacts with. Processor 25 is passed keystrokes generated by the user through keyboard or mouse operations. The keystroke processor passes the characters to the output emulator 17b. To perform its functions, processor 25 follows the program provided by the sequence and execution tables within the AIM keyboard rules.

Output terminal emulator 17b passes the data stream generated by both the AIM keystroke and the AIM menu and point processors 25, 36, 37 (resulting from the user's actions) to the output FIFO 38. The emulator also performs the local terminal operations defined for that terminal type. To perform its functions, emulator 17b follows the program provided by the sequence and execution tables within the emulator rules.

When emulator 17b is passed a character by either the AIM keystroke processor or the AIM menu and point processor, the characters are terminal-independent and, generally, of two types.

Data characters indicate data and are translated to their terminal-specific representation before being passed to the FIFO 38.

Control characters trigger the "local", terminal control operations within the emulator.

Mouse Processing

The mouse processing subsystem (Fig. 7) performs the mouse processor portion of the mouse and keyboard processor functions identified in Fig. 1. The mouse processing subsystem contains a mouse event decoder 40, region selector 42, scroll processor 45, AIM point processor 37 and AIM menu selection processor function 36. Based upon events from mouse operations, central event/time monitor 10 activates mouse event decoder 40. Mouse event decoder 40, based upon the type of mouse operation(s), activates one of the four modules which process mouse operations.

Region selector 42 causes the identification of a workstation screen region, both visually, by displaying, for example, in reverse video for the user, and through a set of coordinates for the workstation software. Selected regions may then be processed by subsequent operations such as cut, copy, etc. When regions are selected which are beyond the boundaries of the current virtual window buffer, region selector 42 activates scroll processor 45 to perform the scrolling functions.

Scroll processor 45 handles the scrolling of the screen display. Scrolling actions are either local, i.e., within the boundaries of the virtual window buffer, or out of bounds of the virtual window buffer. Scrolling beyond the current contents of the virtual window buffer causes the host to perform the scrolling within the application. Using the AIM-supplied scrolling rules, scroll processor 45 is able to interact with the host application, independent of the AIM's involvement, to cause the host to scroll.

AIM point processor 37 positions the cursor in response to the mouse "point and click" operations. Using the AIM-supplied pointing rules, the AIM point processor is able to interact with the host application, independent of the AIM's involvement, to cause the host to reposition the cursor. AIM menu selection processor 36 performs the operations defined for a given menu selection. The operation may either be local, i.e., may cause an action within the workstation, or may direct the host application to perform various operations.

Central event/time monitor 10, in response to a set of primitive mouse events, passes the events to decoder 40. Monitor 10 is also responsible for determining and setting the priority for the distribution of the mouse-generated events. AIM control table 28 contains the data structures required to switch data and operations amongst the AIMs.

Mouse event decoder 40, in response to the set of primitive mouse events from monitor 10, creates a universal set of mouse-generated events and passes the data to the applicable processor (i.e., region selector, scroll processor, AIM point processor or AIM menu selection processor). Decoder 40 generates a different set of these universal events for each of the four operations to be processed by one of the four mouse-event processors: movement, points, scrolls and menu selections.

Region selection: When a "mouse down" event, outside the area occupied by the menu bar or a scroll bar, is followed by a "mouse still down" event in another location, decoder 40 passes the beginning coordinates to the region selector 42 and enters a passthrough state. Until a "mouse up" event is received, the "mouse still down" events are passed through decoder 40 to region selector 42. When the "mouseup" event is passed to the region selector, decoder 40 reenters its decoding state.

Scrolling: When a "mouse down" event inside the area occupied by a scroll bar is followed by a "mouse still down" event in another location, decoder 40 passes the beginning screen coordinates to scroll processor 45 and enters a passthrough state. Until a "mouse up" event is received the "mouse still down" events are passed through the decoder to the scroll processor. When the "mouse up" event is passed to the scroll processor, the decoder reenters its decoding state.

Pointing: When a "mouse down" event inside the area occupied by a window is optionally followed by a set of "mouse still down" events, then by a "mouse up" event in the same location, decoder 40 passes the screen coordinates to AIM point processor 37.

AIM menu selection: When a "mouse down" event inside the area occupied by the menu bar is followed by a set of "mouse still down" events in another location, then by a "mouse up" event which signifies a valid menu selection, decoder 40 passes the menu and item numbers to AIM menu selection processor 36.

The virtual mouse event input port 48 provides an internal interface point where other parts of the system (e.g., the "learn function" when operating in "playback mode") may inject mouse operation events. AIM menu selection processor 36 performs, for the menu item selected, the set of operations defined by the AIM menu selection processing rules (i.e., what to do when a menu item is selected). AIM menu selection processing rules (shown schematically at 49 in Fig. 7) provide the programming for the processing to be performed as a result of menu selections. AIM point processor 37, based upon the AIM pointing rules (i.e., cursor movement rules), directs the host application to position the cursor to the "pointed to" location. The AIM pointing rules 51 provide the programming for the pointing operations.

Scroll processor 45 causes data in buffer 27 to scroll. When the scroll operation crosses the boundaries of the current contents of the buffer, the scroll processor, based upon the scrolling rules 52 supplied by the AIM, directs the host application to scroll buffer 19. When the scroll processor receives the "mouse up" event, it updates a data structure which indicates the coordinates of the currently-displayed screen.

The AIM-supplied scrolling rules 52 provide the programming for the scrolling operations. The AIM supplies the instruction table which the scroll processor uses to "look up" the instructions which it must send to the host application to cause it to perform scrolling operations which are outside the contents of the current buffer 19. Region selector 42 updates buffer 27 to indicate which area of the screen is being selected by the mouse operation. When the region selector receives the "mouse up" event, it updates a data structure which indicates the coordinates of the currently-selected regions. When a region selection crosses the boundaries of buffer 19, the region selector may call the scroll processor to cause the data in buffer 27 to scroll.

AIM Initialization

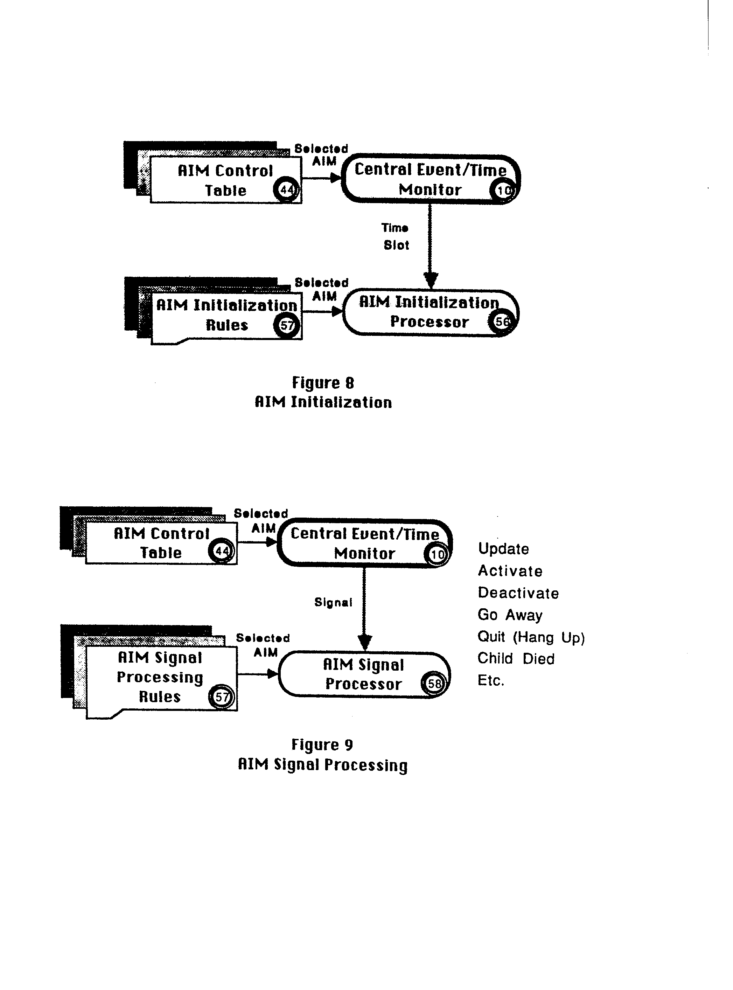

The AIM initialization subsystem (Fig. 8) consists only of the AIM initialization processor 56 and performs the functions required to get an AIM started. When an AIM is launched, event/time monitor 10 activates the AIM initialization processor 56 which sets the beginning environment for the AIM. Central event/time monitor 10, when control is added for an additional AIM by way of the AIM control table 28, calls the AIM initialization processor.

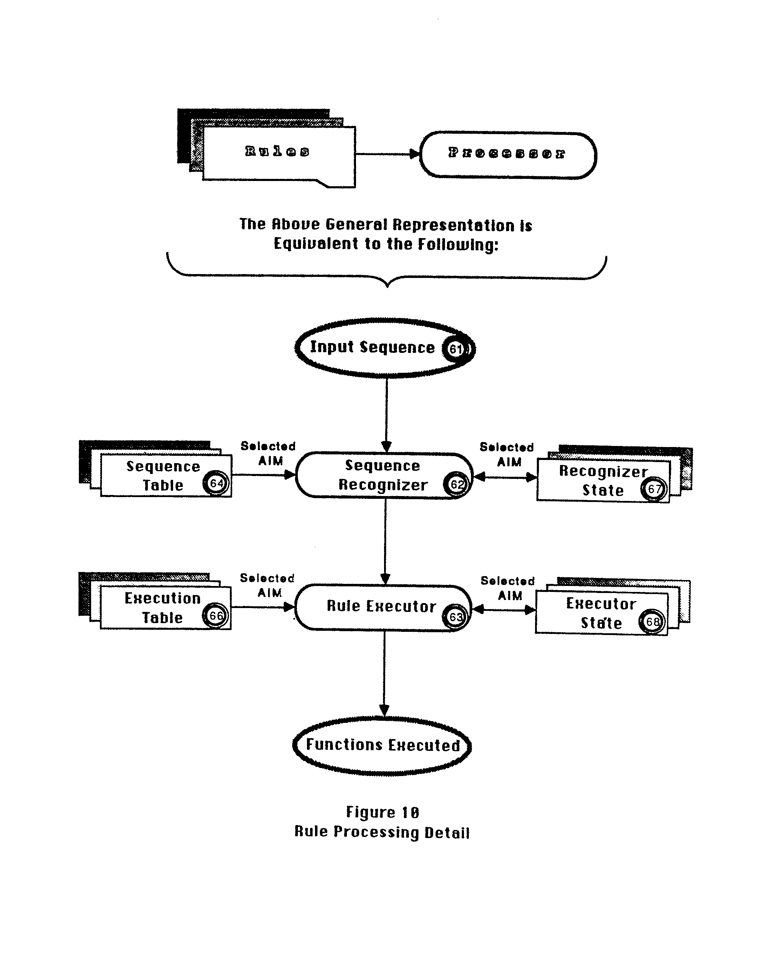

AIM control table 28 contains the data structures required to switch data and operations among the AIMS. AIM initialization processor 56 is the portion of the AIM which performs the initialization operations required by the AIM. The AIM initialization processor follows the program provided by the sequence and execution tables within the AIM initialization rules 57 (see Fig. 10--rule processing detail), to perform its functions. AIM initialization rules 57 provide the programming for the initialization operations.

AIM Signal Processing

The AIM signal processing subsystem (Fig. 9) consists only of AIM signal processor 58 and performs the functions required to respond to various stimuli defined as signals (e.g., events such as create a window or messages such as physical host connection lost, etc.). When such events are received, central event/time monitor 10 activates signal processor 58.

AIM signal processor 58 is the portion of the AIM which performs the operations required to respond to the signals received. The AIM signal processor follows the program provided by the sequence and execution tables within the AIM signal processing rules 57 to perform its functions.

Virtual Terminal and Virtual Window Buffer Detail

Virtual terminal buffer 19 contains four major structures:

Displayable characters:

The displayable characters are represented in ASCII format. The position of the characters is represented by their position in a data structure within buffer 19.

Display attributes:

The display attributes, related to the display as would be presented on the host's terminal being emulated, are represented in a data structure within buffer 19. All attributes which apply to a set of characters, such as set beginning/end of field type, are represented by a single entry for each of the individual characters affected. All attributes, such as display intensity/color, character set, etc., are represented in this manner. The content and form of the data structure which contains the representation of the display attributes is dynamic in definition. That is, the meaning/use of the fields within the data structure is defined by the input terminal emulation rules.

Virtual window mapping:

The corresponding position, if any, of a terminal buffer 19 character within the window buffer 27 is maintained. That is, every displayable character in the buffer 19 has a corresponding pointer which indicates whether or not it is contained within the window buffer and, if so, where it is located within the window buffer.

Portions of the virtual window mapping may be defined as active by the AIM. Active mapping areas provide the ability to cause screen information from a particular area within the terminal buffer 19 to be automatically placed in the window buffer in a specified position, with the attributes set up in the window buffer. This function can be performed by the terminal emulator 17a without further interaction from the AIM.

Most recent character changes:

Since certain terminal command sequences change sets of characters, a data structure is maintained to keep track of the lines which contain changes.

Virtual window buffer 27 contains four major structures. The structures for displayable characters, display attributes and virtual mapping are essentially the same as those described above for the structures of virtual terminal buffer 19.

Window buffer 27 also contains the following structures.

Most recent region changes:

Since the update of the workstation screen is performed on the basis of time, a data structure is maintained to keep track of the regions which contain changes since the previous update.

Rule Processing Detail

The various rule processors (Fig. 10) form the backbone of the AIMs. The rule processor is a translator which accepts stimuli (i.e., the input sequence), parses the stimuli, then executes a specified set of functions as a result of the stimuli. In essence, the rule processor is a set of state machines driven by the input sequence 61 and various states. In this use, a state is synonymous with a condition or a status.

Logically, there are two such state machines, the sequence recognizer 62 and the rule executor 63. The commands are determined by the type of stimuli and specified by the sequence table 64. The capabilities of the "language" represented by the state machine are determined by the execution table 66. Generally, the functions which are executed as a result of this process are routines with a high level of functionality with respect to the workstation's tasks.

Sequence recognizer 62 is the language parser portion of the translator. The input sequence 61 is parsed by matching against sequence table's 64 entries, including the recognizer state 67. When a match is found, the sequence table entry points to a specific rule within the execution table 66. Control is then passed to the rule executor 63.

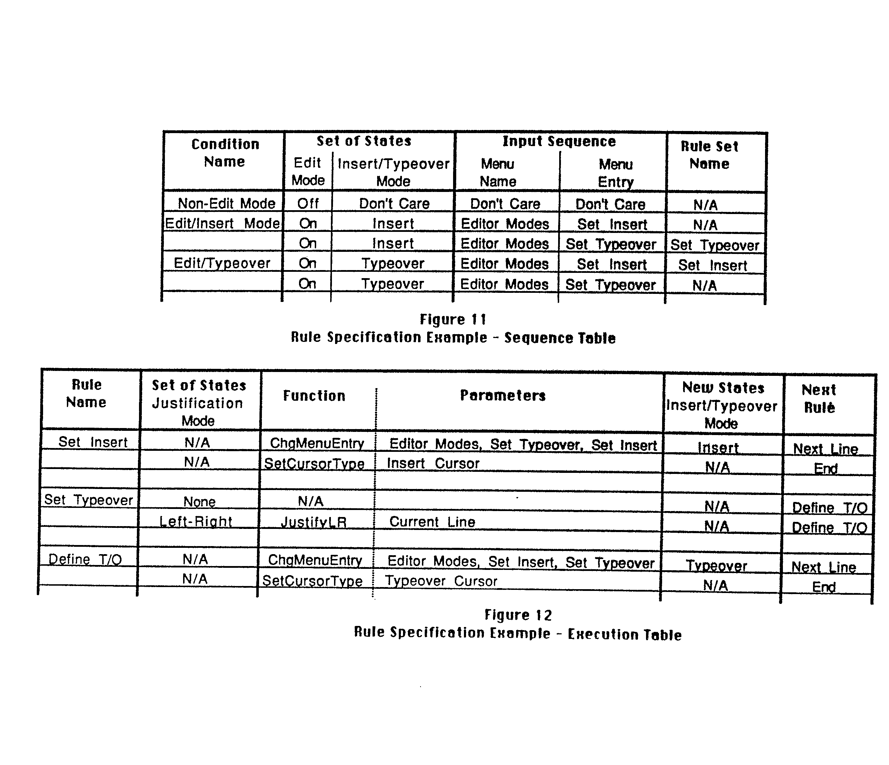

Sequence table 64 contains the parsing sequences which the rule processor recognizes as commands. In this respect, the sequence table defines the language understood by the rule processor. In addition to the command sequence definition, the sequence table also points to the associated function set to be executed as a result of that command. The sequence table has the structure shown in Fig. 11.

Condition name:

The meanings of the terms used in the example of Fig. 11 are as follows, assuming that the example is for AIM menu selection processing for a word processing/editor interface which has a pull-down menu. Fig. 11 also assumes that changing the mode setting changes the menu entry to allow a user to change to the other mode and that when exiting the insert mode, the current line of text must be justified if that portion of text is set to be justified.

The condition name provides a user-oriented name for the sequence recognizer line entry. The line entry defines the recognizable state which leads to the selection of the rule set to be executed.

Set of states:

The fields which make up the set of states (to be recognized) are dynamically defined during the specification of the sequence table. These fields include both local and other states.

Input sequence:

The input sequence is the multi-byte input to the recognizer; for example, the arriving characters in the case of the terminal emulator. The input sequence is parsed based upon the current values of the set of states specified. The result is the identification of the rule set to be executed.

Rule set name:

The rule set name provides a user-oriented name for the set of rules to be executed.

Recognizer State:

The recognizer state contains the current, local status information for the sequence recognizer. Local states may be defined during the specification of the execution table.

Rule Executor:

The rule executor performs the command execution functions within the translator. The rule executor has the constructs to perform the flow control operations which are equivalent to the more traditional grammars specified as "continue", "goto", "break", "exit", "if....then....else....", "for....do....done' and "while....do....done". The rule executor also resolves symbolic references contained in the rule line entry. The symbolic references may come from the input sequence or from the execution table. When the references have been resolved, the rule executor passes control to the functions to be executed.

Execution table:

The execution table shown in Fig. 12 contains the sets of entries which the rule executor interprets to perform the commands indicated in the sequence table. In this respect, the execution table defines the capabilities of the rule processor. The terms in the execution table have the following meanings:

Rule name:

The rule name provides a user-oriented name for the set of rules to be executed.

Set of states:

    The fields which make up the set of states to be recognized are dynamically defined during the specificaton of the rules. These fields include both local and other states.

Function:

    The function is the name of the function to be executed. Ultimately, it must be a name which can be resolved to a known C-code function. Externally, it may be mapped, through the use of the developer tools and tables, to a more human-useable form.

Parameters:

    The parameters are the parameters to be passed to the function being executed. Parameters which are symbolic names must be resolved to the C-code level. Externally, they may be mapped, through the use of the developer tools and tables, to a more user-oriented form.

(Sets of:) new states:

    The new states are the settings for the local states. These states may be in addition to the states maintained by the functions themselves. This allows the AIM specifier to create states as required to indicate the state of the host application (e.g., Mode: Insert or Overtype). The fields which make up the set of states to be recognized are dynamically defined during the specification of the rules.

(Sets of:) next rule:

    The next rule is the name of the next rule to be executed. The lack of an entry indicates the next sequential rule entry. The next rule may also indicate a rule set as a subroutine.

Executor state:

The executor state 68 contains the current, local status information for the rule executor.

Although the sequence and execution tables are explained as two separate units, that particular division is used only as a model. The actual implementation may range from a single-table version for a simple rule processor which uses a linear interpretation scheme to a version which uses different tables and corresponding state machines for such elements as the input sequence parsing, the current state parsing, the actual function execution, etc.

Technology.

Although the workstation concept described herein is based upon common, commercially-available hardware technology, it is the price-performance ratio of this proven hardware technology in combination with some of the most recent software technology in the user-interface area which makes the described workstation a practical invention today. However, since it is obvious that neither the hardware nor the software technology will stagnate, the invention, from its concept to its architecture and engineering, is designed to embrace improved hardware and software technologies. As the cost per unit of performance of the hardware continues to decline and as new or improved user-interface software becomes commercially practical, the described invention will be able to incorporate these concepts without changing its basic concept or even its basic architecture.

There have been two major developments in the hardware technology which make the invention described above commercially viable. The first was the development of physically small, inexpensive computers based upon microprocessors in the class usually referred to as "super-micros". The second development was the commercial production of the first type of computers with companion printers which have graphic capabilities with enough resolution to present the type of display screen and printed material required by the "iconic", graphics-based types of presentation used by the present user-interface software and hardware technology.

An early implementation of the invention involved the use of the technologies mentioned above in an unmodified form. That is, the workstation software used existing microprocessors along with the existing Read-only Memory (ROM), semiconductor Random Access Memory (RAM) and external mass storage in the form of disks, both low-capacity, flexible disks and medium-capacity, hard disks.

Various hardware trends apparent today will make the described invention easier to implement in the future. Various implementations such as Commodore's Amiga computer are making extensive use of dedicated hardware modules to support the graphics functions required. This approach will greatly improve the price-performance ratio of the hardware. Future generations of the present workstation may use various combinations of ROM, alternative RAM technology, alternative disk technology and/or alternative microprocessor technology.

For example, it would be natural to supply various versions of the workstation with the run-time system contained in ROM. Similarily, it would be practical to develop certain "fixed-product" workstations for use as specific monitors in areas such as process control, which contained even the AIM in ROM. In general, the only portions of the architecture which are not implementable in ROM are the dynamic data structures.

Many of the portions of the architecture could also be implemented using combinatorial, sequential and/or microcoded, processor-based logic. Modules such as the direct, native environment interfaces would be prime candidates for this approach. In the area of microprocessors, developments such as Intel's "transputter" technology may be used to provide separate computers for the various asynchronous units within the present architecture.

There has been one major development in the software technology which makes the workstation concept attractive; the development of, and industry acceptance of, the various approaches to the windowed, iconic, graphics-oriented user-interface presentations, available as mass-produced, inexpensive software development tools for the "super micros" mentioned above.

One embodiment of the present invention utilizes an Apple Macintosh computer to provide a multisession, terminal emulator with the majority of the features specified for the IBM 3270 terminal. The product, in combination with Tri Data Corporation's Netway 1000a communication protocol converter, interfaces to IBM computers via Bisynchronous (BSC) or Systems Network Architecture (SNA)/Synchronous Data Link Control (SDLC).

The present workstation software can be implemented on any computer which provides the computing and graphics capability required to present a windowed, iconic, graphical style of user interface. In practical terms, commercial versions are most readily produced utilizing computers which provide the tools to expedite development. Such computers available today are the Apple Macintosh and the IBM PC/XT/AT with the Microsoft Windows environment. Other possibilities available today are the Atari 520ST computer and the Commodore Amiga computer.

The windowed, iconic, graphical style of user interface commercialized by the Xerox Star product and exemplified by the Apple Macintosh is generally considered the best user interface technology available today. In that respect, the present workstation retains the presentation of the user interface as provided for by the Native Environment upon which it is based (e.g., the Apple Macintosh or the IBM PC/XT/AT). However, it should be noted that the current architecture embraces new and/or completely different presentations of user interface technologies as they become available. For example, with the commercial viability of speech recognition and accurate, intelligible voice systhesis, compatible AIMs for these products can be implemented.

In general, any new user interface technology may be added to the architecture of the present invention. Technologies which deal with output to the workstation user are interfaced through a module which translates the host's presentation (via the host's screen) to the new presentation format for the user. Technologies which deal with input from the user are interfaced through a module which translates what the user does, as input, relative to what the user interacts with (e.g., the workstation's screen), to what the host understands as valid input from the terminal it thinks it is communicating with.

Attached hereto as Appendix A are copies of computer programs written in C code showing implementation of the present invention. Appendix A includes the following:

1.  Central event monitor 10, parts 1, 2 and 3;
2.  FITOS (Operating System Desk Top Initiator);
3.  FITOS (Operating System Tool Box Functions;
4.  Host Interface Routines For Serial Asynch multichannel;

0237671

-37-

5. AIM Initialization Routine;
6. Emulation of H(Heathkit)19 terminal as an AIM;
7. AIM--Virtual Terminal Support Module;
8. AIM--Virtual Terminal Library;
9. AIM--Graphic Window for Multiplan AIM.

CLAIMS

1. A system for executing a computer application program in a host computer (11) under the control of a second computer located at a workstation and including a display screen (13), characterised by:

means for translating selected portions of the host computer's presentation information into functionally equivalent user-oriented presentation information for use in the second computer; and

means for translating a user's responses to the user-oriented presentation information at the second computer into response information for use in the host computer to interact with the application program.

2. A system as claimed in claim 1 characterised by an input terminal emulator (17a) which emulates a terminal at the workstation, means for supplying the host computer's presentation information to the terminal emulator, and means for utilizing the output of the terminal emulator to produce the functionally equivalent user-oriented presentation information.

3. A system as claimed in claim 2 characterised by means for supplying at least some of the output of the input terminal emulator (17a) to a virtual terminal buffer (19) for buffering of the at least some of the terminal emulator output.

4. A system as claimed in claim 3 characterised by means for processing selected outputs of the terminal emulator (17a) and the virtual terminal buffer (19) in an application interface module (21), the module processor processing its inputs in accordance with characteristics of the application program to be executed in the host computer (11).

5. A system as claimed in claim 4 characterised by means for supplying the product of the application interface module processor (21) to a virtual window manager (26) for controlling the display screen (13).

6. A system as claimed in claim 3 characterised by means for supplying at least some of the output of the terminal emulator (17a) to a virtual window buffer (27) to buffer information to be displayed on the display screen (13).

7. A system for executing a computer application program in a host computer (11) under the control of a secondary computer having a display screen (43) and a user-friendly interface, characterised by:

a communication function module (16) connected to the host computer, the communication function module receiving information from the host computer and transmitting information from the second computer to the host computer;

an input terminal emulator (17) connected to the communication function module for translating information received by the communication function module from the host computer into functionally equivalent user-oriented presentation information for use in the second computer;

a virtual window buffer (27) for receiving information from the input terminal emulator; and

means responsive to information from the virtual window buffer for controlling the display screen in response to execution of the application program in the host computer.

8. A method of executing a computer application program in a host computer (11) under the control of a second computer located at a workstation and including a display screen (13), characterised by the steps of;

translating selected portions of the host computer's presentation information into functionally equivalent user-oriented presentation information for use in the second computer;   and

translating a user's responses to the user-oriented presentation information at the second computer into response information for use in the host computer to interact with the application program.

9.   A method as claimed in claim 8 characterised by the steps of supplying the host computer's presentation information to an input terminal emulator (17a) which emulates a terminal at the workstation, and utilizing the output of the input terminal emulator to produce the functionally equivalent user-oriented presentation information.

10.   A method as claimed in claim 9 characterised by the step of supplying at least some of the output of the input terminal emulator (17a) to a virtual terminal buffer (19) for buffering of said at least some of the terminal emulator output.

11.   A method as claimed in claim 10 characterised by the steps of processing selected outputs of the input terminal emulator (17a) and the virtual terminal buffer (19) in an application interface module processor (21), the module processor processing its inputs in accordance with characteristics of the application program to be executed in the host computer.

12.   A method as claimed in claim 11 characterised by the step of supplying the output product of the application interface module to a virtual window manager (26) for controlling the display screen (13).

13.   A method as claimed in claim 10 characterised by the step of supplying at least some of the output product of the terminal emulator (17a) to a virtual window buffer (27) for buffering information to be displayed on the display screen (13).

14. A method as claimed in claim 12 characterised by the step of supplying at least part of the output product of the window manager (26) to a virtual window buffer (27) for buffering information to be displayed on the screen.

15. A method as claimed in claim 14 characterised by the step of supplying at least part of the output of the terminal emulator (17a) to the virtual window buffer (27).

16. A method as claimed in any preceding claim characterised in that the workstation comprises a keyboard (12), and in that the translation of a user's responses includes transmitting information from the keyboard at the workstation to the host computer (11).

17. A method as claimed in claim 17 characterised by the steps of;

supplying the information from said keyboard (12) to an output terminal emulator (17b) which emulates a terminal at the host computer 11; and

utilizing the output of the output terminal emulator to produce the response information for use in the host computer.

18. A method as claimed in claim 17 characterised by the step of supplying the output of the output terminal emulator (17b) to a first-in first-out buffer (38) for buffering the output terminal emulator output.

19. A method as claimed in any one of claims 1 to 16 characterised in that the workstation comprises a mouse (12), and in that the translation of a user's responses includes transmitting information relative to movement of the mouse at the workstation to the host computer (11).

20. A method as claimed in claim 19 characterised by the steps of:

supplying the information relative to movement of the mouse to an output terminal emulator (17b) which emulates a terminal at the host computer (11); and

utilizing the output of the output terminal emulator to produce the response information for use in the host computer.

21. A method as claimed in claim 20 characterised by the step of supplying the output of the output terminal emulator (17b) to a first in--first out buffer (30) for buffering the output terminal emulator output.

22. A method of executing a computer application program in a host computer (11) under the control of a second computer having a user-friendly interface, characterised by the steps of:

generating a plurality of application interface module programs for a plurality of the application programs, each of the application interface module programs being arranged to be executed in the second computer to cause execution of the corresponding one of the application programs in the host computer;

transmitting a selected one of said application interface module's programs to the second computer; and

executing the selected one of the application interface module programs in the second computer using the user-friendly interface to produce execution of the application program in said host computer.

23. A method as claimed in claim 22 characterised by the steps of storing a plurality of the application interface module programs in the host computer.

24. A method of developing an application interface module for controlling the program in a host computer (11) under the control of a second computer located at a workstation, characterised by the steps of:

editing rule tables relating to application-specific interface operations for controlling the translation of selected portions of the host computer's presentation information into functionally equivalent user-oriented presentation information for use in the second computer and for controlling the translation of a user's responses to the user-oriented presentation information at the second computer into response information for use in the host computer to interact with the application program.

# POLLAK MERCER& TENCH

**0237671**

13 May 1987

European Patent Office
P B 5818
Patentlaan 2
2280 HV Rijswijk (ZH)
Netherlands

Dear Sirs

Application 86 308 395.2
Mitem Development Partners
Our Ref   M-356

I refer to the invitation to rememedy deficiencies dated 18 December 1986 the term for response to which was extended by the communication dated 4 March 1987 until 18 May 1987.

It has now been decided that the best course would be to cancel Appendix A from the application, and cancellation of Appendix A is accordingly hereby now requested.

It is understood that formal drawings have now been received and are acceptable, so the present request for cancellation deals satisfactorily with all the formal deficiencies to which objection was taken.

Yours faithfully
POLLAK MERCER & TENCH

JONES, Ian
(Applicants' Authorised Representative)

P.J. MASSAAR   1 2 JUN 1987

European Patent Attorneys
Chartered Patent Agents
Trademark Agents

**High Holborn House**
**52-54 High Holborn**
**London WC1V 6RY**

Telephone 01-242 3524
Telex 268801 Pollak G
Fax 01-405 6607
Cables Dickollak London WC1

Roy E Oliver BSc MITMA CPA
Ian Jones BSc MITMA CPA
Roger B Thomson BSc CPA
Robert Ackroyd BSc PhD CPA

Consultant
H F Maddox CEng FIERE CPA

Trademarks
Roger G Moore

Manager
John M Pearson

Figure 1
Architecture Overview

Figure 2
System Information Flow

Figure 2
System Information Flow

| | Operating/Run-Time System | Physical Keyboard Processor 23 |
| --- | --- | --- |
| AIM Initialization Processor 8 | Application Interface Module (AIM) | Menu Key Processor 24 |
| AIM Signal Processor 9 | | AIM Keystroke Processor 25 |
| | Terminal Emulator | (Output) Terminal Emulator 17b |
| | Communication Functions | Output FIFO 38 |

(Figure 2a)

0237671

MITEM

Mouse Event
Decoder (40)

AIM Menu Selection
Processor (36)

Scroll Processor

AIM Point & Region
Processor (37)

Multiplexor (39)

Demultiplexor (32)

tput) Link-level
ommunication
rotocol Driver (41)

Native Environment
I/O Port Driver (33)

(Input) Link-level
Communication
Protocol Driver (31)

Host Computer

(Figure 2b)

0237671

(Figure 2c)

Figure 3
Input Stream Processing

AIM Control Table → **Selected AIM** → Central Event/Time Monitor (10)

**Time Slot**

Native Environment Operating System ← Bit-Map Update Manager (30) ← **Selected Window** ← Virtual Window Buffer (27)

**Figure 4
Display Processing**

AIM Control Table (44) → **Selected AIM** → Central Event/Time Monitor (10)

**Time Slot**

Display Font (53) → **Selected Font** → Native Environment Bit-Map Update (43) ← **Selected Window** ← Virtual Window Buffer (27)

**Figure 5
Display Update**

Figure 6
Keystroke Processing

**Figure 7**
**Mouse Operation Processing**

**Figure 8**
**AIM Initialization**

Update
Activate
Deactivate
Go Away
Quit (Hang Up)
Child Died
Etc.

**Figure 9**
**AIM Signal Processing**

Rules → Processor

The Above General Representation is
Equivalent to the Following:

Input Sequence (61)

Sequence Table (64) — Selected AIM → Sequence Recognizer (62) ← Selected AIM → Recognizer State (67)

Execution Table (66) — Selected AIM → Rule Executor (63) ← Selected AIM → Executor State (68)

Functions Executed

Figure 10
Rule Processing Detail

| Condition Name | Set of States | | Input Sequence | | Rule Set Name |
| | Edit Mode | Insert/Typeover Mode | Menu Name | Menu Entry | |
|---|---|---|---|---|---|
| Non-Edit Mode | Off | Don't Care | Don't Care | Don't Care | N/A |
| Edit/Insert Mode | On | Insert | Editor Modes | Set Insert | N/A |
| | On | Insert | Editor Modes | Set Typeover | Set Typeover |
| Edit/Typeover | On | Typeover | Editor Modes | Set Insert | Set Insert |
| | On | Typeover | Editor Modes | Set Typeover | N/A |

Figure 11
Rule Specification Example - Sequence Table

| Rule Name | Set of States Justification Mode | Function | Parameters | New States Insert/Typeover Mode | Next Rule |
|---|---|---|---|---|---|
| Set Insert | N/A | ChgMenuEntry | Editor Modes, Set Typeover, Set Insert | Insert | Next Line |
| | N/A | SetCursorType | Insert Cursor | N/A | End |
| | | | | | |
| Set Typeover | None | N/A | | N/A | Define T/O |
| | Left-Right | JustifyLR | Current Line | N/A | Define T/O |
| | | | | | |
| Define T/O | N/A | ChgMenuEntry | Editor Modes, Set Insert, Set Typeover | Typeover | Next Line |
| | N/A | SetCursorType | Typeover Cursor | N/A | End |

Figure 12
Rule Specification Example - Execution Table